# NEUE EUROPÄISCHE PATENTSCHRIFT

(11) **EP 0 892 724 B2**
(45) Veröffentlichungstag und Bekanntmachung des Hinweises auf die Entscheidung über den Einspruch: **05.01.2011**
(45) Hinweis auf die Patenterteilung: 25.07.2001
(21) Anmeldenummer: 97923760.9
(22) Anmeldetag: 24.04.1997
(51) Int. Cl.: B60J 1/17, E05F 11/38, F16B 5/02

(54) **BEFESTIGUNGSVORRICHTUNG**
FASTENING DEVICE
DISPOSITIF DE FIXATION

(30) Priorität: 30.04.1996 DE 19619087
(43) Veröffentlichungstag der Anmeldung: 27.01.1999
(73) Patentinhaber: Brose Fahrzeugteile GmbH & Co. KG, 96450 Coburg (DE)
(72) Erfinder: MÜLLER-BLECH, Ralf, D-96465 Neustadt (DE); LANGMANN, Erik, Auburn Hills, MI 48326 (US); BUCHTA, Christoph, D-40699 Erkrath (DE); HÜTTER, Ottmar, D-96484 Meeder (DE); FRÖBIG, Thomas, D-96450 Coburg (DE)
(74) Vertreter: Müller, Wolfram Hubertus
(86) Internationale Anmeldenummer: PCT/DE1997/000850
(87) Internationale Veröffentlichungsnummer: WO 1997/040994

(56) Entgegenhaltungen:
- EP-A- 0 684 393
- EP-A1- 0 708 220
- DE-A- 4 319 705
- US-A- 5 502 926

## Beschreibung

Die Erfindung betrifft eine Vorrichtung zur Befestigung eines Kunststoffgehäuses einer Verstelleinrichtung für Kraftfahrzeuge an einem tragenden Teil einer Fahrzeugkarosserie nach dem Oberbegriff des Anspruchs 1.

Die in einem Kraftfahrzeug vorgesehenen Verstelleinrichtungen werden in der Regel an tragenden Teilen der Kraftfahrzeugkarosserie befestigt. Dabei ist es häufig erforderlich, ein Kunststoffgehäuse (z.B. ein Motorgehäuse) an einem Bauteil (z.B. einem Türinnenblech) zu befestigen, das aus einem formstabileren Material besteht. Diese Bauteilverbindungen sind vorzugsweise als Schraubverbindungen ausgebildet, damit die Komponenten der Verstelleinrichtung zu Reparaturzwecken von dem tragenden Teil der Kraftfahrzeugkarosserie abgenommen werden können.

Bei derartigen Bauteilverbindungen besteht das Problem, daß Kunststoff durch Materialalterung schrumpft und sich unter Temperatureinfluß verformt, wodurch sich die Verbindung lockern kann. Es entsteht dann ein Spiel in der Befestigung der entsprechenden Baugruppe der Verstelleinrichtung. Handelt es sich hierbei beispielsweise um den in einem Kunststoffgehäuse gelagerten Antriebsmotor eines Fensterhebers, so führt die gelockerte Befestigung des Motorgehäuses zu frühzeitigem Verschleiß und erzeugt im Betrieb unangenehme Schlaggeräusche.

Zur Vermeidung dieser Probleme ist es aus der deutschen Offenlegungsschrift DE 43 19 705 A1 bekannt, in ein Kunststoff-Bauelement eine aus einem formstabilen Material bestehende Einpreßmutter einzudrücken und diese mittels Schrauben und eines Distanzstücks, das ebenfalls aus einem Werkstoff mit hoher Formstabilität besteht und sich einerseits an der Einpreßmutter und andererseits an dem tragenden Bauteil der Fahrzeugkarosserie abstützt, an der Fahrzeugkarosserie zu befestigen.

Diese technische Lehre ermöglicht zwar eine sichere Befestigung eines aus Kunststoff bestehenden Bauelements an einem tragenden Bauteil der Kraftfahrzeugkarosserie, sie hat jedoch den Nachteil, daß ihre Herstellung sehr aufwendig ist. Insbesondere ist es erforderlich, als Befestigungsmittel neben den üblichen Schrauben zusätzlich Distanzstücke und Einpreßmuttern, die zunächst in das Kunststoffelement eingedrückt werden müssen, zu verwenden.

Der Erfindung liegt die Aufgabe zugrunde, eine Vorrichtung zur Befestigung eines Kunststoffgehäuses einer Verstelleinrichtung für Kraftfahrzeuge an einem tragenden Teil einer Kraftfahrzeugkarosserie zu schaffen, die möglichst einfach und kostengünstig herzustellen ist und mit der gleichzeitig eine dauerhafte und haltbare Verbindung des Kunststoffgehäuses mit dem tragenden Teil erreicht wird.

Diese Aufgabe wird erfindungsgemäß durch eine Vorrichtung mit den Merkmalen des Anspruchs 1 gelöst.

Die Erfindung beruht auf der überraschenden Erkenntnis, daß eine sehr haltbare Verbindung zwischen einem Kunststoffgehäuse und einem aus einem formstabileren Material bestehenden tragenden Teil eines Kraftfahrzeugs hergestellt werden kann, wenn das Kunststoffgehäuse und das tragende Teil unter Verwendung eines zweiten Kunststoffgehäuses aneinander befestigt werden. Dazu wird vorgeschlagen, das zweite Kunststoffgehäuse an der dem ersten Kunststoffgehäuse abgewandten Seite des tragenden Teils der Fahrzeugkarosserie anzuordnen und die beiden Kunststoffgehäuse durch ein Durchgangsloch des tragenden Teils hindurch mit Hilfe eines geeigneten Verbindungsmittels derart miteinander zu verbinden, daß das tragende Teil der Fahrzeugkarosserie zwischen den beiden Kunststoffgehäusen eingeklemmt wird. Dabei ist zusätzlich vorgesehen, daß eines der beiden Kunststoffgehäuse einen Zapfen aufweist, der das Durchgangsloch des tragenden Teils durchgreift und von einer Aussparung umschlossen wird, mit der das andere der beiden Kunststoffgehäuse versehen ist.

Durch das Verschachteln der Kunststoffgehäuse (der Zapfen des einen Kunststoffgehäuses wird in die Ausnehmung des anderen Kunststoffgehäuses gesteckt) wird eine sehr einfach und schnell montierbare, geschlossene Verbindung geschaffen, bei der sich die beiden Kunststoffgehäuse axial und/oder radial (abhängig von der Ausbildung des Zapfens, die sich z.B. nach der Beanspruchung der Bauteilverbindung richtet) unmittelbar aneinander abstützen können. Die beiden Kunststoffgehäuse reagieren außerdem in gleicher Weise auf Temperatureinflüsse und Alterung, so daß die Verbindung auch aus diesen Gründen dauerhaft stabil bleibt. Eine Lockerung der Verbindung durch Fließen des Kunststoffs wird vermieden.

Bei der Erprobung der erfindungsgemäßen Bauteilverbindung hat sich gezeigt, daß nicht nur die beiden Kunststoffgehäuse sehr fest miteinander verbunden sind, sondern daß gerade auch die Befestigung der beiden Kunststoffgehäuse an dem tragenden Teil der Fahrzeugkarosserie dauerhaft stabil bleibt und sich nicht lockert. Dies wird durch das Einklemmen des tragenden Teils zwischen zwei sehr fest miteinander verbundenen Kunststoffgehäusen erreicht.

Diese sehr haltbare Verbindung erfordert neben einem geeigneten Verbindungsmittel (z.B. einer Schraube) keine zusätzlichen formstabilen Bauteile (wie z.B. Distanzstücke). Dadurch lassen sich das Gewicht sowie die Herstellungs- und Materialkosten der Bauteilverbindung reduzieren. Auch ist die Anzahl der für die Befestigungsvorrichtung an sich notwendigen Bauteile minimal. Ferner läßt sich insbesondere durch die Verwendung einer Kunststoffschraube als Verbindungsmittel ein sehr hohes Anzugsmoment erreichen, so daß eine entsprechend feste Verbindung entsteht.

Bei einer bevorzugten Ausführungsform der Erfindung liegt der Zapfen des einen Kunststoffgehäuses sowohl mit seiner Stirnfläche als auch mit seiner Mantelfäche an der Innenwand der Aussparung des anderen Kunststoffgehäuses an. Dadurch können sich die beiden Bauelemente sowohl axial als auch radial aneinander abstützen.

Der Zapfen ist vorzugsweise zylindrisch und die Aussparung dementsprechend hohlzylindrisch ausgebildet, wobei der Zapfen insbesondere spielfrei in das Durchgangsloch des tragenden Teils der Fahrzeugkarosserie eingedrückt werden kann.

Bei einer bevorzugten Ausführungsform der Erfindung ist weiter vorgesehen, daß die beiden Kunststoffgehäuse durch das Verbindungsmittel lösbar miteinander verbunden sind. Dies kann z.B. dadurch erreicht werden, daß das Verbindungsmittel als Kunststoffschraube ausgebildet ist und der Zapfen ein Innengewinde aufweist, in das die Kunststoffschraube eingeschraubt wird, wobei die Kunststoffschraube vorzugsweise zentrisch bezüglich des Durchgangslochs und des Zapfens angeordnet ist. Bei dieser Ausführungsform der Erfindung kann die Bauteilverbindung beispielsweise zu Reparaturzwecken jederzeit gelöst werden.

Bei einigen Anwendungen der vorliegenden Erfindung kann es bedeutsam sein, daß auch dann, wenn eines der beiden Kunststoffgehäuse durch Lösen der Bauteilverbindnung von dem tragenden Teil der Fahrzeugkarosserie abgenommen wird, das andere Kunststoffgehäuse weiterhin mit dem tragenden Teil verbunden bleibt. In diesem Fall ist es vorteilhaft, wenn das entsprechende Kunststoffgehäuse mit einem zusätzlichen Befestigungsmittel an dem tragenden Teil befestigt ist. An diese zusätzliche Befestigung werden meist keine besonderen Anforderungen hinsichtlich der Stabilität gestellt; sie dient lediglich einer provisorischen Befestigung des entsprechenden Kunststoffgehäuses an dem tragenden Teil der Fahrzeugkarosserie. Als zusätzliches Befestigungsmittel kann daher beispielsweise ein Rastelement vorgesehen sein, das vorzugsweise an dem Zapfen des entsprechenden Kunststoffgehäuses angeordnet ist und mit dem der Zapfen in dem Durchgangsloch des tragenden Teils gehalten wird.

Bei dem an einem tragenden Teil der Fahrzeugkarosserie zu befestigenden Kunststoffgehäuse kann es sich um ein Motorgehäuse eines Kraftfahrzeugfensterhebers handeln, das üblicherweise an einem Trägerblech der Kraftfahrzeugtür befestigt wird.

Besonders vorteilhaft ist die Anwendung der vorliegenden Erfindung zur Befestigung des Motorgehäuses eines Seilfensterhebers an einem tragenden Teil der Kraftfahrzeugtür, wobei als zweites Kunststoffgehäuse das Seilausgangsgehäuse des Fensterhebers, in dem eine Seiltrommel gelagert ist, vorgesehen ist. In diesem Fall werden mit der erfindungsgemäßen Bauteilverbindung gleichzeitig das Motorgehäuse und das Seilausgangsgehäuse an einem tragenden Teil der Fahrzeugkarosserie befestigt. Als einzige Verbindungsmittel sind dazu Kunststoffschrauben oder dergl. notwendig. Das zur Ausformung des Zapfens an einem der Bauelemente benötigte Material wird bei dem mit der Aussparung versehenen Bauelement wieder eingespart. Die Bauteilverbindung zeichnet sich daher auch durch geringe Wandstärken aus. Bei dieser Ausführungsform der Erfindung werden die Synergieeffekte, die bei der Anwendung der erfindungsgemäßen Bauteilverbindung möglich sind, besonders deutlich.

Die erfindungsgemäße Verbindung zwischen einem Kunststoffgehäuse und einem tragenden Teil der Fahrzeugkarosserie erfolgt häufig an mehreren Befestigungspositionen, die durch jeweils ein Durchgangsloch in dem tragenden Teil gebildet werden, um insbesondere bei größeren Kunststoffgehäusen eine hinreichende Stabiltät der Bauteilverbindung zu gewährleisten.

Weitere Vorteile der Erfindung werden bei der nachfolgenden Beschreibung eines Ausführungsbeispiels anhand der Zeichnungen deutlich werden.

Es zeigen:
- Fig. 1 -: eine schematische Darstellung eines Seilfensterhebers, der mit der erfindungsgemäßen Vorrichtung an einem tragenden Teil einer Fahrzeugtür befestigbar ist;
- Fig. 2 -: ein bevorzugtes Ausführungsbeispiel der erfindungsgemäßen Befestigungsvorrichtung.

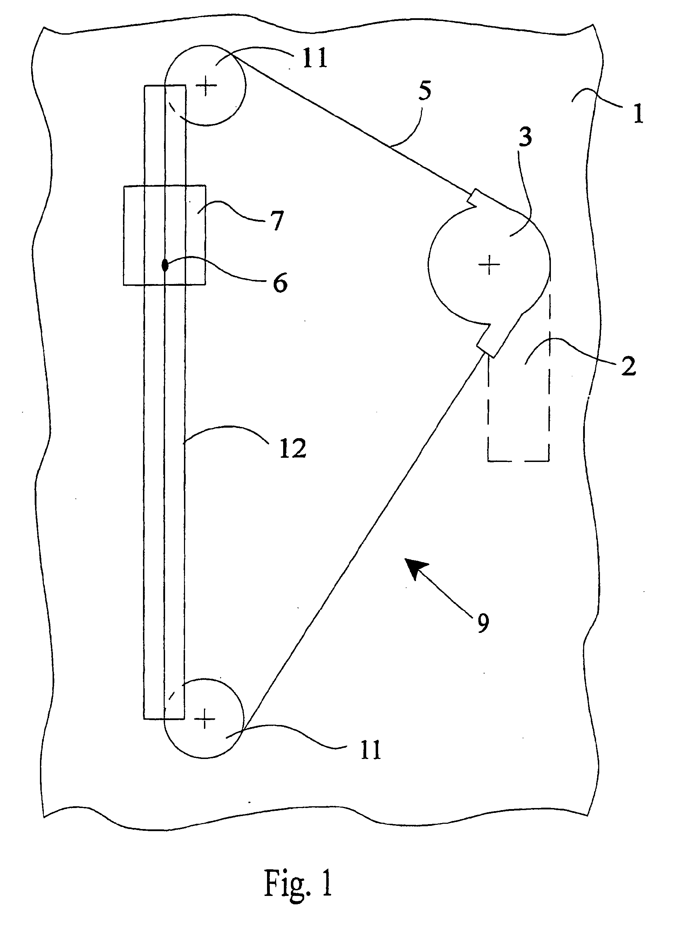

In Figur 1 ist ein Seilfensterheber 9 schematisch dargestellt, der an einem Trägerblech 1 einer Kraftfahrzeugtür, bei dem es sich beispielsweise um das Türinnenblech oder die Trägerplatte eines Türmoduls handeln kann, befestigt ist.

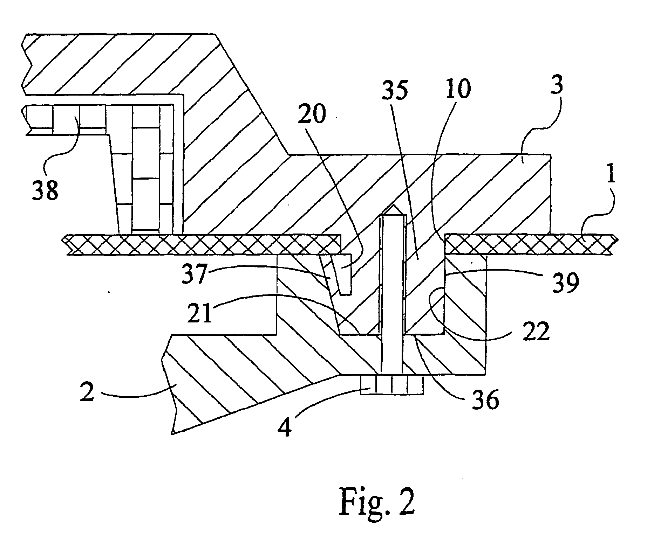

Der Antriebsmotor dieses Seilfensterhebers 9 ist in einem Gehäuse 2 gelagert, welches mit Hilfe der erfindungsgemäßen Befestigungsvorrichtung gemeinsam mit einem Seilausgangsgehäuse 3 an dem Trägerblech 1 befestigt ist, vergl. Fig. 2. Das Seil 5 des Fensterhebers 9 wird über zwei Seilrollen 11 geführt und ist mit Hilfe eines mit dem Seil 5 verquetschten Seilnippels 6 mit einem Mitnehmer 7 verbunden. Der Mitnehmer 7 steht einerseits verschiebbar mit einer sich entlang der Verstellrichtung der (nicht dargestellten) Fensterscheibe erstreckenden Führungsschiene 12 in Eingriff und trägt andererseits die Fensterscheibe.

Durch eine Drehung der in dem Seilausgangsgehäuse 3 gelagerten Seiltrommel nach rechts bzw. nach links wird der Mitnehmer 7 entlang der Führungsschiene 12 nach oben bzw. nach unten verschoben, wodurch sich die Fensterscheibe öffnen und schließen läßt.

In der Figur 2 wird dargestellt, wie sich mit der erfindungsgemäßen Befestigungsvorrichtung das Motorgehäuse 2 und das Seilausgangsgehäuse 3 besonders vorteilhaft an dem Trägerblech 1 einer Kraftfahrzeugtür befestigen lassen.

Figur 2 zeigt ein Trägerblech 1 einer Kraftfahrzeugtür, das eine als Durchgangsloch 10 ausgebildete Befestigungsstelle für den Antrieb eines Kraftfahrzeugfensterhebers aufweist. Der Antrieb des Fensterhebers umfaßt vorliegend einen (nicht dargestellten) Motor, der in einem aus Kunststoff bestehenden Motorgehäuse 2 angeordnet ist, und eine Seiltrommel 38, die von dem Motor angetrieben wird und die in einem ebenfalls aus Kunststoff bestehenden Seilausgangsgehäuse 3 drehbar gelagert ist.

Das Seilausgangsgehäuse 3 weist einen im wesentlichen zylindrischen Zapfen 35 auf, der das Durchgangsloch 10 des Trägerblechs 1 durchgreift und in eine durch eine Hülse gebildete, im wesentlichen hohlzylindrische Aussparung 20 des Motorgehäuses 2 ragt. Dabei liegt der Zapfen 35 einerseits mit seiner Stirnfläche 36 an der Basisfläche 21 und andererseits mit seiner äußeren Mantelfläche 39 an der Innenwand 22 der Hülse an. Dadurch stützen sich die beiden Kunststoff-Bauelemente 2, 3 radial und axial unmittelbar aneinander ab. Ferner sind das Motorgehäuse 2 und das Seilausgangsgehäuse 3 mittels einer Kunststoffschraube 4, die eine Ausnehmung in dem Motorgehäuse 2 durchgreift und in ein Innengewinde des Zapfens 35 eingeschraubt ist, lösbar miteinander verbunden. Die Kunststoffschraube 4 ist so fest angezogen, daß das Trägerblech 1 zwischen dem Motorgehäuse 2 und dem Seilausgangsgehäuse 3 eingeklemmt wird. Mit der Kunststoffschraube 4 läßt sich ein sehr großes Anzugsmoment erreichen, so daß dort, wo der Kopf der Schraube 4 und das Motorgehäuse 2 aneinander anliegen eine entsprechend große Flächenpressung wirkt.

Bei dem Trägerblech 1 kann es sich um ein Türblech handeln, mit dem der Naßraum der Fahrzeugtür von dem Trockenraum des Fahrzeugs getrennt wird. In diesem Fall ist das Motorgehäuse 2 in der Regel im Trockenraum angeordnet, wohingegen sich das Seilausgangsgehäuse 3 und die weiteren Bauelemente des Seilfensterhebers im Naßraum der Fahrzeugtür befinden.

Bei einem möglichen Defekt des Antriebsmotors des Fensterhebers läßt sich dieser sehr einfach von dem Trägerblech 1 entfernen, indem die Kunststoffschraube 4 gelöst und das Motorgehäuse 2 von dem Trägerblech 1 abgenommen wird. Der Fensterhebermotor kann dann repariert oder durch einen neuen Motor ersetzt werden. Dabei bleibt die Verbindung zwischen dem Seilausgangsgehäuse 3 und dem Trägerblech 1 bestehen; denn das Seilausgangsgehäuse 3 ist an dem Trägerblech 1 zusätzlich durch ein an dem Zapfen 35 angeordnetes, federndes Rastelement 37 formschlüssig befestigt, indem das Rastelement 37 den Rand des Durchgangslochs 10 hintergreift (Verliersicherung). Aufgrund dieser zusätzlichen Verbindung wird das Seiltrommelgehäuse 3 auch nach dem Entfernen des Motorgehäuses 2 in seiner bisherigen Position an dem Trägerblech 1 gehalten, und es wird verhindert, daß sich das Seil des Seilfensterhebers beim Abnehmen des Motorgehäuses 2 verspult. Nach der erneuten Befestigung des Motorgehäuses 2 ist daher keine neue Justierung des Seilfensterhebers notwendig.

Die in Figur 2 dargestellte Bauteilverbindung basiert auf der Verbindung zweier Kunststoff-Bauelemente, nämlich des Motorgehäuses 2 und des Seilausgangsgehäuses 3, mittels einer ebenfalls aus Kunststoff bestehenden Schraube 4, wobei die beiden Bauelemente 2, 3 gleichzeitig an einem Türblech 1. befestigt werden. Die Bauelemente 2, 3 können durch die Kunststoffschraube 4 sehr fest miteinander verbunden werden, ohne daß die Gefahr einer Lockerung der Bauteilverbindung durch Materialalterung oder Temperatureinflüsse besteht: Denn die Bauelemente 2, 3 (und selbst die Schraube 4) bestehen aus dem gleichen Material (Kunststoff) und sind außerdem durch das Verschachteln des Zapfens 35 und der Ausnehmung 20 gegen eine Lockerung der Verbindung durch Fließen des Kunststoffs gesichert.

Die in Figur 2 dargestellte Bauteilverbindung hat neben ihrer Haltbarkeit den Vorteil, daß sie sehr einfach herstellbar ist. Es ist lediglich erforderlich, den Zapfen 35 des Seilausgangsgehäuses 3 in das Durchgangsloch 10 des Türblechs 1 einzufügen und dann die Hülse 20 des Motorgehäuses 2 auf den aus dem Durchgangsloch 10 herausragenden Abschnitt des Zapfens 35 aufzusetzen. Anschließend wird die Befestigungsschraube 4 eingeführt und festgezogen.

Eine derartige Verbindung zwischen dem Motorgehäuse 2, dem Seilausgangsgehäuse 3 und dem Trägerblech 1 erfolgt in der Regel an mehreren Befestigungspositionen, die durch jeweils ein Durchgangsloch 10 in dem Trägerblech 1 gebildet werden. Als einzige Befestigungsmittel werden dabei Kunststoffschrauben 4 benötigt, bei denen es sich um sehr leichte und preiswerte Bauteile handelt. Dies zeigt sehr deutlich die erhebliche Einsparung an Material und Montageaufwand, die sich mit der vorliegenden Erfindung erreichen läßt. Gegenüber den aus dem Stand der Technik bekannten Befestigungsvorrichtungen werden nicht nur Einpreßmuttern und Distanzstücke eingespart, sondern es können auch in einem Montagevorgang zwei Bauelemente des Fensterhebers an dem Trägerblech 1 befestigt werden.

Es sind noch weitere Ausführungsformen der vorliegenden Erfindung denkbar. Von Bedeutung ist lediglich, daß jeweils zwei Kunststoff-Bauelemente mit Hilfe eines geeigneten Befestigungsmittels derart miteinander verbunden werden, daß diese zugleich an einem tragenden Bauteil der Fahrzeugkarosserie befestigt sind.

## Patentansprüche

1. Befestigungsvorrichtung umfassend ein Kunststoffgehäuse (2) einer Verstelleinrichtung für Kraftfahrzeuge, mit einem Antrieb und ein tragendes Teil (1) einer Fahrzeugkarosserie mit mindestens einer durch ein Durchgangsloch (10) gebildeten Befestigungsstelle, wobei an der Befestigungsstelle eine Verbindung zwischen dem Kunststoffgehäuse (2) und dem tragenden Teil (1) hergestellt ist und wobei das mindestens eine Durchgangsloch (10) als Befestigungsstelle des Antriebs der Verstelleinrichtung vorgesehen ist, der einen Antriebsmotor umfasst, und der Antriebsmotor sich von dem tragenden Teil (1) entfernen lässt, indem das Kunststoffgehäuse (2) nach Lösen der Verbindung von dem tragenden Teil (1) abgenommen wird,
**dadurch gekennzeichnet, daß**
a) zur Befestigung des Kunststoffgehäuses (2) an dem tragenden Teil (1) an der dem Kunststoffgehäuse (2) abgewandten Stirnseite des Durchgangslochs (10) ein zweites Kunststoffgehäuse (3) der Befestigungsvorrichtung angeordnet ist,
b) eines der beiden Kunststoffgehäuse (2, 3) einen Zapfen (35) aufweist, der durch das Durchgangsloch (10) in eine Aussparung (20) ragt, mit der das andere der beiden Kunststoffgehäuse (2, 3) versehen ist und die den Zapfen (35) umschließt, und
c) die beiden Kunststoffgehäuse (2, 3) mit einem lösbaren Verbindungsmittel (4) derart miteinander verbunden sind, daß das tragende Teil (1) zwischen ihnen eingeklemmt wird.

2. Vorrichtung nach Anspruch 1, **dadurch gekennzeichnet, daß** der Zapfen (35) mit seiner Stirnfläche (36) und/oder seiner Mantelfäche (39) an der Innenwand (21, 22) der Aussparung (20) anliegt.

3. Vorrichtung nach Anspruch 1 oder 2, **dadurch gekennzeichnet, daß** der Zapfen (35) im wesentlichen zylindrisch und die Aussparung (30) im wesentlichen hohlzylindrisch ausgebildet ist.

4. Vorrichtung nach einem der vorhergehenden Ansprüche, **dadurch gekennzeichnet, daß** der Zapfen (35) das Durchgangsloch (10) des tragenden Teils (1) spielfrei durchgreift.

5. Vorrichtung nach einem der vorhergehenden Ansprüche, **dadurch gekennzeichnet, daß** das Verbindungsmittel (4) als Schraube ausgebildet ist und die beiden Kunststoffgehäuse (2, 3) lösbar miteinander verbindet.

6. Vorrichtung nach Anspruch 5, **dadurch gekennzeichnet, daß** das Verbindungsmittel (4) als Kunststoffschraube ausgebildet ist und daß der Zapfen (35) ein Innengewinde aufweist, in das die Kunststoffschraube eingeschraubt ist.

7. Vorrichtung nach einem der vorhergehenden Ansprüche, **dadurch gekennzeichnet, daß** eines der Kunststoffgehäuse (2, 3) mit einem zusätzlichen Befestigungsmittel (37) an dem tragenden Teil (1) befestigt ist.

8. Vorrichtung nach Anspruch 7, **dadurch gekennzeichnet, daß** das zusätzliche Befestigungsmittel (37) als Rastelement ausgebildet ist.

9. Vorrichtung nach Anspruch 8, **dadurch gekennzeichnet, daß** das Rastmittel Bestandteil des Zapfens (35) ist und den Rand des Durchgangslochs (10) hintergreift.

10. Vorrichtung nach einem der vorhergehenden Ansprüche, **dadurch gekennzeichnet, daß** es sich bei der Verstelleinrichtung (9) um einen Fensterheber handelt.

11. Vorrichtung nach Anspruch 10, **dadurch gekennzeichnet, daß** die beiden Kunststoffgehäuse (2, 3) durch ein Motorgehäuse und ein Seilausgangsgehäuse eines Seilfensterhebers (9) gebildet werden.

12. Vorrichtung nach einem der vorhergehenden Ansprüche, **dadurch gekennzeichnet, daß** an dem tragenden Teil (1) der Fahrzeugkarosserie mehrere Durchgangslöcher (10) vorgesehen sind, durch die hindurch die beiden Kunststoffgehäuse (2, 3) an dem tragenden Teil (1) befestigt werden.

## Claims

1. Fixing device comprising a plastics housing (2) of an adjusting device for motor vehicles, with a drive, and a supporting part(1) of a vehicle body with at least one fixing point formed by a through hole (10), wherein a connection between the plastics housing (2) and the supporting part (1) is formed at the fixing point, and wherein the at least one through hole (10) is provided as fixing point of the drive of the adjusting device, which comprises a drive motor, and the drive motor can be removed from the supporting part (1) in that the plastics housing (2) is taken off from the supporting part (1) after releasing the connection, **characterised in that**
a) for fixing the plastics housing (2) on the supporting part (1) a second plastics housing (3) of the fixing device is mounted on the end side of the through hole (10) facing away from the plastics housing (2),
b) one of the two plastics housings (2, 3) has a stud (35) which projects through the through hole (10) into a recess (20) which is provided on the other of the two plastics housings (2, 3) and which encloses the stud (35), and
c) the two plastics housing (2, 3) are connected with each other by releasable connecting means (4) so that the supporting part (1) is clamped inbetween them.

2. Device according to claim 1 **characterised in that** the stud (35) adjoins the inside wall (21, 22) of the recess (20) by its end face (36) and/or its sleeve face (39).

3. Device according to claim 1 or 2 **characterised in that** the stud (35) is substantially cylindrical and the recess (30) is substantially hollow cylindrical.

4. Device according to one of the preceding claims **characterised in that** the stud (35) engages through the hole (10) in the support part (1) without play.

5. Device according to one of the preceding claims **characterised in that** the connecting means (4) are designed as a screw which connects the two plastics housings (2, 3) together in detachable manner.

6. Device according to claim 5 **characterised in that** the connecting means (4) are formed as a plastics screw and that the stud (35) has an internal thread into which the plastics screw is screwed.

7. Device according to one of the preceding claims **characterised in that** one of the plastics housings (2, 3) is fixed on the support part (1) by an additional fastening means (37).

8. Device according to claim 7 **characterised in that** the additional fastening means (37) is formed as a detent element.

9. Device according to claim 8 **characterised in that** the detent means are a constituent part of the stud and engage behind the edge of the through hole (10).

10. Device according to one of the preceding claims **characterised in that** the adjusting device (9) is a window lifter.

11. Device according to claim 10 **characterised in that** the two plastics housings (2, 3) are formed by a motor housing and a cable exit housing of a cable window lifter (9).

12. Device according to one of the preceding claims **characterised in that** several through holes (10) are provided on the supporting part (1) of the vehicle body through which the two plastics housings (2, 3) are fixed on the supporting part (1).

## Revendications

1. Dispositif de fixation comprenant un boîtier en matière plastique (2) d'un dispositif de réglage pour véhicule automobile comprenant un entraînement et une pièce portante (1) d'une carrosserie de véhicule avec un emplacement de fixation formé par un trou traversant (10), dans lequel une liaison entre le boîtier en matière plastique (2) et la pièce portante (1) est établie au niveau de l'emplacement de fixation, et dans lequel ledit au moins un trou traversant (10) est prévu à titre d'emplacement de fixation de l'entraînement du dispositif de réglage, qui comprend un moteur d'entraînement, et le moteur d'entraînement peut être enlevé de la pièce portante (1) en enlevant le boîtier en matière plastique (2) après détachement de la liaison de la pièce portante (1),
**caractérisé en ce que** :
a) un deuxième boîtier en matière plastique (3) du dispositif de fixation est agencé du côté frontal du trou traversant (10) opposé au boîtier en matière plastique (2), pour la fixation du boîtier en matière plastique (2) sur la pièce portante (1),
b) l'un des deux boîtiers en matière plastique (2, 3) comporte un tenon (35) qui, traversant le trou traversant (10), pénètre dans un évidement (20) dont est pourvu l'autre des deux boîtiers en matière plastique (2, 3), et qui entoure le tenon (35), et
c) les deux boîtiers en matière plastique (2, 3) sont reliés l'un à l'autre avec un organe de liaison libérable (4) de telle façon que la pièce portante (1) est pincée entre eux.

2. Dispositif selon la revendication 1, **caractérisé en ce que** le tenon (35) est appliqué par sa surface frontale (36) et/ou par sa surface enveloppe (39) contre la paroi intérieure (21, 22) de l'évidement (20).

3. Dispositif selon l'une ou l'autre des revendications 1 et 2, **caractérisé en ce que** le tenon (35) est réalisé essentiellement sous forme cylindrique, et **en ce que** l'évidement (30) est réalisé sous forme essentiellement cylindrique creuse.

4. Dispositif selon l'une des revendications précédentes, **caractérisé en ce que** le tenon (35) traverse le trou traversant (10) de la pièce portante (1) sans jeu.

5. Dispositif selon l'une des revendications précédentes, **caractérisé en ce que** l'organe de liaison (4) est réalisé sous forme de vis, et **en ce qu'**il relie les deux boîtiers en matière plastique (2, 3) l'un à l'autre de façon détachable.

6. Dispositif selon la revendication 5, **caractérisé en ce que** l'organe de liaison (4) est réalisé sous forme de vis en matière plastique, et **en ce que** le tenon (35) comporte un taraudage dans lequel la vis en matière plastique est vissée.

7. Dispositif selon l'une des revendications précédentes, **caractérisé en ce que** l'un des boîtiers en matière plastique (2, 3) est fixé sur la pièce portante (1) au moyen d'un organe de fixation supplémentaire (37).

8. Dispositif selon la revendication 7, **caractérisé en ce que** l'organe de fixation supplémentaire (37) est réalisé sous forme d'élément à enclenchement.

9. Dispositif selon la revendication 8, **caractérisé en ce que** l'organe à enclenchement fait partie du tenon (35) et engage par l'arrière la bordure du trou traversant (10).

10. Dispositif selon l'une des revendications précédentes, **caractérisé en ce que** le dispositif de réglage (9) est un lève-vitre.

11. Dispositif selon la revendication 10, **caractérisé en ce que** les deux boîtiers en matière plastique (2, 3) sont constitués par un boîtier de moteur et par un boîtier de sortie de câble d'un lève-vitre à câble (9).

12. Dispositif selon l'une des revendications précédentes, **caractérisé en ce que** plusieurs trous traversants (10) sont prévus sur la pièce portante (1) de la carrosserie du véhicule, à travers lesquels les deux boîtiers en matière plastique (2, 3) sont fixés sur la pièce portante (1).
